(19) Europäisches Patentamt
European Patent Office
Office européen des brevets

(11) **EP 2 675 836 B1**

(12) **EUROPEAN PATENT SPECIFICATION**

(45) Date of publication and mention of the grant of the patent:
**11.04.2018 Bulletin 2018/15**

(21) Application number: **12705094.6**

(22) Date of filing: **10.02.2012**

(51) Int Cl.:
**C08G 69/26** *(2006.01)*   **C08G 69/28** *(2006.01)*
**C08G 69/34** *(2006.01)*   **C08L 77/06** *(2006.01)*
**C08L 77/08** *(2006.01)*

(86) International application number:
**PCT/EP2012/052278**

(87) International publication number:
**WO 2012/110413 (23.08.2012 Gazette 2012/34)**

(54) **POLYAMIDE CONTAINING MONOMER UNITS OF 1,4-BUTYLENE DIAMINE**

POLYAMID MIT MONOMEREINHEITEN VON 1,4-BUTYLENDIAMIN

POLYAMIDE CONTENANT DES UNITÉS MONOMÈRES DU 1,4-BUTYLÈNE DIAMINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2011 EP 11154527**
**15.02.2011 EP 11154528**

(43) Date of publication of application:
**25.12.2013 Bulletin 2013/52**

(73) Proprietor: **DSM IP Assets B.V.**
**6411 TE Heerlen (NL)**

(72) Inventors:
• **JANSSEN, Pim Gerard Anton**
**NL-6160MA Geleen (NL)**
• **RULKENS, Rudy**
**NL-6160MA Geleen (NL)**

• **LIGTHART, Godefridus Bernardus Wilhelmus Leonardus**
**NL-6160MA Geleen (NL)**

(74) Representative: **DSM Intellectual Property**
**P.O. Box 4**
**6100 AA Echt (NL)**

(56) References cited:
**EP-A1- 0 022 048      EP-A1- 0 122 005**
**EP-A1- 0 196 981      EP-A1- 1 533 331**
**WO-A1-00/37538      WO-A1-99/66003**
**WO-A1-2010/105939   GB-A- 1 000 216**
**GB-A- 1 055 610**

Remarks:
The file contains technical information submitted after the application was filed and not included in this specification

EP 2 675 836 B1

**Description**

The invention relates to a polyamide containing monomeric units of 1,4-butylene diamine and an aliphatic dicarboxylic acid with 6 - 12 carbon atoms.

Such a polyamide is for instance known from WO00/09586. The polyamide containing monomeric units of 1,4-butylene diamine and an aliphatic dicarboxylic acid having 6 - 12 carbon atoms shows desirable properties for a large amount of different applications, like for instance film, plate and packaging produced there from as well as moulded products, like for instance containers, but also electric and electronic parts.

The object of the present invention is to provide a polyamide containing monomeric units of 1,4-butylene diamine and a fatty acid based dicarboxylic acid with further improved properties, so that new applications for the polyamide may be developed and that an even better use of the polyamide in the yet proposed applications may be obtained. Copolyamides thereof have also been reported in GB 1,000,216A or EP 0 196981A1.

Surprisingly this object has been reached by a polyamide containing monomeric units of 1,4-butylene diamine, an aliphatic dicarboxylic acid having 6 - 12 carbon atoms which is adipic acid or 1,10-decanedioic acid and a fatty acid based dicarboxylic acid having 18 or 36 carbon atoms and/or diamine derived there from, which process comprises the steps of:

a) making a salt mixture containing 1,4-butylene diamine, the aliphatic dicarboxylic acid which is adipic acid or 1,10-decanedioic acid and the fatty acid based dicarboxylic acid having 18 or 36 carbon atoms and/or diamine derived there from, the mixture containing less than 50 wt% water and distilling the mixture to less than 15 wt% of water at a pressure of less than 16 barg, while keeping the mixture at a temperature high enough to keep it liquid,
b) starting the polymerization of the mixture obtained in step a) by increasing the temperature until to at least 180 °C until at least 80 % of the reactive groups has been converted,
c) optionally supplying further 1,4-butylene diamine, an aliphatic dicarboxylic acid which is adipic acid or 1,10-decanedioic acid and a fatty acid based dicarboxylic acid having 18 or 36 carbon atoms and/or diamine derived there from to the reaction mixture.

The polyamide according to the invention surprisingly shows a combination of desirable properties. The polyamide according to the invention shows for example a favorable balance in mechanical properties and hydrophobic behavior. Favorable mechanical properties include a high stiffness, a high elongation at break, a high breaking strength and a low creep. This is very surprising since polyamides containing monomeric units of fatty acid based dicarboxylic acid and/or diamine have often been developed for use in hot melts and further adhesives, because of their low melting points and fluid character, that is obtained already when only a part of the monomeric units in the polyamide are monomeric units of fatty acid based dicarboxylic acid and/or diamine.

From US 5138027 for example, is a polyamide known that contains monomeric units of a fatty acid based dicarboxylic acid, in this case a dimerised fatty acid, that is used as matrix resin in thermographic inks. Because of the printing process wherein such inks are used, the polyamide must have a relatively low melting point of between 115 and 125 °C. From US-7098293 a polyamide containing monomeric units of a fatty acid based dicarboxylic acid, in this case a dimerised fatty acid, is known that is used as matrix resin in a hot melt adhesive. The hot melt melts at a well defined, relatively low, temperature to produce an easily applicable fluid. For this reason the polyamides have a melting point of approximately 100 °C. From US-5001218 polyamides containing relatively small amounts of dimerised fatty acids are known. The polyamides have moderate melting temperatures. Thus the polyamides containing monomeric units of a fatty acid based dicarboxylic acid are until now mainly applied in inks and adhesives like hot melts and further binding systems and have not found application in moulding compositions. One reason for this is the low melt temperature of the polyamides.

A further advantage of the polyamides according to the invention is that they, next to the above mentioned favorable balance in mechanical properties and hydrophobic behavior, contain monomeric units that can be obtained from renewable resources. At least the fatty acid used to produce the fatty acid based dicarboxylic acid may be obtained from renewable resources. This results in an important reduction of the production of greenhouse gases, which are caused by the use of polymers existing of monomeric units obtained from the processing of fossil oil.

Again a further advantage of the polyamide according to the invention is that it has a high melt temperature and high melt enthalpy, which make the polyamide also suitable for use in moulding compositions.

The polyamide according to the invention may be a random copolymer or a block copolymer. The polyamide according to the invention may contain at least 50 mol% of monomeric units of 1,4-butylene diamine, an aliphatic dicarboxylic acid having 6 - 12 carbon atoms which is adipic acid or 1,10-decanedioic acid and a fatty acid based dicarboxylic having 18 or 36 carbon atoms acid and/or a diamine derived there from. Preferably the polyamide according to the invention contains at least 70 mol%, more preferably at least 80 mol%, even more preferably at least 90 mol%, even more preferably at least 98 mol%, most preferably at least 99 mol% monomeric units of 1,4-butylene diamine, an aliphatic dicarboxylic acid having 6 - 12 carbon atoms which is adipic acid or 1,10-decanedioic acid and a fatty acid based dicarboxylic acid having 18 or 36 carbon atoms and/or a diamine derived there from. The rest of the monomers, making up to a total of 100%, can be other monomers, preferably isomorphous monomers.

The polyamide according to the invention preferably contains an aliphatic dicarboxylic acid with 6 or 10 carbon atoms, thus the polyamide according to the invention contains as aliphatic dicarboxylic acid adipic acid, or 1,10-decanedioic acid. Most preferably the aliphatic dicarboxylic acid is 1,10-decanedioic acid, since a polyamide with desirable properties is obtained that consists for a large part or even the largest part of monomeric units that originate from renewable resources.

In one preferred embodiment the fatty acid based dicarboxylic acid has between 12 and 22 carbon atoms. Such a fatty acid based dicarboxylic acid may be obtained by converting a fatty acid into a fatty acid based dicarboxylic acid. Methods for that are known by the skilled person. Oxidizing the fatty acid into the dicarboxylic acid enzymatically is for example published in APPLIED AND ENVIRONMENTAL MICROBIOLOGY, Oct. 2003, p. 5992 - 5995 by Eshenfeld et. al. Obtaining the fatty acid based dicarboxylic acid by chemical reaction is for example published in Angew. Chem. Int. Ed. 2010, 49, 4306-4308, by Mecking et. al. In the context of the present invention, the fatty acid based dicarboxylic acid has been obtained from stearic acid or a mixture of C18 saturated and unsaturated fatty acids, of which unsaturations preferably have been hydrogenated. The diamines may be obtained by converting the carboxylic acid groups into an amine group by one of the well known reactions.

In another more preferred embodiment the fatty acid based dicarboxylic acid is a dimerised fatty acid having between 24 and 44 carbon atoms. Such dicarboxylic acids may be obtained by the dimerisation of a monomeric unsaturated fatty acid and is generally referred to as dimerised fatty acid. After the dimerisation reaction the so obtained oligomer mixture is further processed, for example by distillation, to yield a mixture having a high content of the dimerised fatty acid. It is also possible to produce a derivative of the dimerised fatty acid by replacing one or two of the acid groups by an amine group by one of the well known reactions.

The dimerised fatty acid and/or diamine derived therefrom more preferably contains from 32 up to 44 carbon atoms as in this range the polyamide obtained has a lower level of moisture absorption and a higher melt temperature. In the context of the present invention, the dimerised fatty acid and/or diamine derived therefrom contains 36 carbon atoms. The amount of C-atoms normally is an average value, since the dimerised fatty acids and/or diamines derived therefrom normally are commercially available as a mixture. Further details relating to the structure and the properties of the dimerised fatty acid may be found in the corresponding leaflet "Pripol C36-Dimer acid" of the company Croda, (former UNICHEMA, Emmerich, Germany) or in the brochure of the Company COGNIS (Düsseldorf, Germany) "Empol Dimer and Poly-basic Acids"; Technical Bulletin 114C (1997). The diames are typically produced from the dicarboxylic acids and are for example produced and sold by Croda under the commercial name Priamine™.

The double bonds in the dimerised fatty acid and/or diamine derived therefrom, may be saturated by catalytic hydrogenation. It is preferred that the dimerised fatty acid and/or diamine derived therefrom is saturated. Therefore a special embodiment of the invention provides for a polyamide containing monomeric units of 1,4-butylene diamine, an aliphatic dicarboxylic acid having 6-12 carbon atoms which is adipic acid or 1,10-decanedioic acid and a dimerised saturated fatty acid based dicarboxylic acid and/or diamine derived therefrom. This polyamide can be obtained via processes well-known to the man skilled in the art or via the process described above, which process comprises the steps of:

a) making an aquous salt mixture containing 1,4-butylene diamine, the aliphatic dicarboxylic acid having 6 - 12 carbon atoms which is adipic acid or 1,10-decanedioic acid and the dimerised saturated fatty acid based dicarboxylic acid and/or diamine derived there from, the mixture containing less than 50 wt% water and distilling the mixture to less than 15 wt% of water at a pressure of less than 16 barg, while keeping the mixture at a temperature high enough to keep it liquid,

b) starting the polymerization of the mixture obtained in step a) by increasing the temperature until to at least 180 °C until at least 80 % of the reactive groups has been converted,

c) optionally supplying further 1,4-butylene diamine, an aliphatic dicarboxylic acid having 6 - 12 carbon atoms and a fatty acid based dicarboxylic acid and/or diamine derived there from to the reaction mixture.

The special preferences for the monomers are as described above.

Very good results are obtained if the polyamide in the various embodimetns contains both the fatty acid based dicarboxylic acid and a diamine derived there from. In this case an especially favourable melt temperature can be reached.

The polyamide according to the various embodiments of the invention may contain all kind of further monomer units, especially monomeric units of i) other aliphatic linear dicarboxylic acids, for example octadecanedicarboxylic acid and hexadecanedicarboxylic acid or ii) diamines, for example ethylenediamine, hexamethylenediamine or decanediamine, iii) cycloaliphatic and/or aromatic dicarboxylic acids and/or diamines, for example cyclohexanediamine, cyclohexanedicarboxylic acid, terephthalic acid, isophthalic acid, m-xylylene diamine and p-xylylenediamine and iv) mono functional amines and/or carboxylic acids, for example acetic acid, propionic acid, benzoic acid, stearic acid, stearylamine as well as v) tri- or multifunctional monomers, for example bis-hexamethylenetriamine, trimelitic anhydride, lysine or mesitylic acid.

Preferably the polyamide according to the various embodiments of the invention has a melt temperature, Tm, that fulfils the equation:

$$Tm_0 > Tm > Tm_0 - C*\Phi M \qquad (1)$$

wherein:

Tm = the melt temperature of the polyamide according to the invention [°C],
$Tm_0$ = the melt temperature of the polyamide corresponding to the polyamide according to the invention, however without the fatty acid based dicarboxylic acid or the diamine derived there from [°C],
C is a constant having the value C < 200 [°C] and
$\Phi M$ is the molar fraction of monomer units of fatty acid based dicarboxylic acid and/ or, if present, the fatty diamine derived there from in the polyamide [-].

This fraction can be calculated by dividing the molar amount of monomer units of fatty acid based dicarboxylic acid and/or, if present, the fatty diamine derived there from, by the total molar amount of monomer units.

Preferably C<180, more preferably C<160, more preferably C<140, more preferably C <120, even more preferably C<110, even more preferably C <100, most preferably C < 90. With a lower value for C, the melt temperature of the polyamide according to the invention is higher. Generally a higher melt temperature results in a better stiffness.

A polyamide with the melt tmperature according to formula (1)shows a surprisingly high melt temperature, which makes the polyamide highly suitable for use in applications that have to be able to withstand high temperatures. Furthermore the polyamide shows a relatively high crystallinity, which provides the polyamide with even further improved mechanical properties, like for instance modulus, strength, elongation at break, breaking strength and creep. Preferably the polyamide shows a crystallinity drop expressed as

$$(\Delta Hm_0 - \Delta Hm_{corr})/ \Phi M < 300 \text{ J/g} \qquad (2)$$

$$\Delta Hm_{corr} = \Delta Hm_{measured}*(1 - \Phi W) \qquad (3)$$

$\Delta Hm_0$ is the melt enthalpie of the polyamide corresponding to the polyamide of the invention, however without the fatty acid based dicarboxylic acid and/or diamine derived there from.
$\Delta Hm_{corr}$ is the theoretical maximum melt enthalpie of the polyamide according to the invention, calculated according to formula 3.
$\Delta Hm_{measured}$ is the melt enthalpie actually measured at the polyamide according to the invention.
$\Phi M$ is as defined above, for formula 1.
$\Phi W$ is the weight fraction of monomer units of fatty acid based dicarboxylic acid and/ or, if present, the fatty diamine derived there from in the polyamide [-].

This fraction can be calculated by dividing the weight of monomer units of fatty acid based dicarboxylic acid and/or, if present, the fatty diamine derived there from, by the total weight of monomer units.

Preferably the crystallinity drop is lower than 250 J/g more preferably lower than 225 J/g, more preferably lower than 200 J/g, even more preferably lower than 150 J/g.

The solution viscosity, measured according to ISO 307, 4th edition in m-cresol at a concentration of 1.0 g/100 ml, of the polyamide according to the invention is preferably at least 1.5, more preferably at least 2.0, more preferably at least 2.5.

The invention also relates to the process for the production of the polyamide containing monomeric units of 1,4-butylene diamine, an aliphatic dicarboxylic acid having 6 - 12 carbon atoms which is adipic acid or 1,10-decanedioic acid and a fatty acid based dicarboxylic acid having 18 or 36 carbon atoms and/or diamine derived there from. The process comprises the steps of:

a) making an aqueous salt mixture containing 1,4-butylene diamine, the aliphatic dicarboxylic acid having 6 - 12 carbon atoms which is adipic acid or 1,10-decanedioic acid and the fatty acid based dicarboxylic acid having 18 or 36 carbon atoms and/or diamine derived there from, the mixture containing less than 50 wt% of water and distilling the mixture to less than 15 wt% of water at a pressure of less than 16 barg, while keeping the mixture at a temperature high enough to keep it liquid,

b) starting the polymerization of the mixture obtained in step a) by increasing the temperature until to at least 180 °C until at least 80 % of the reactive groups has been converted,

c) optionally supplying further 1,4-butylene diamine, an aliphatic dicarboxylic acid having 6 - 12 carbon atoms and a fatty acid based dicarboxylic acid and/or diamine derived there from to the reaction mixture.

The process according to the invention used to preprae the polyamide according to the various embodiments results in the formation of a polyamide having the increased melt point according to formula 1. Preferably in step a) the aqueous salt mixture is made with a water content of less than 40 wt%, more preferably less than 35 wt%, more preferably less than 25 wt%, even more preferably less than 20 wt%, most preferably less than 15 wt%. Preferably the water content is at least 5 wt% as with lower levels of water content viscosity of the solution becomes very high so that problems could arise with stirring. Preferably the reaction temperature in step b) is at least 190 °C, more preferably at least 200 °C.

The invention is also directed to a composition, preferably a composition suitable for moulding, containing at least one polyamide according to the invention and at least one additive. Examples of suitable additives include antioxidants, dyes or pigments, UV absorbers, hydrolytic stabilizers, anti-static agents, fillers, lubricants etc. Preferably the moulding composition contains glass fibers.

The invention also relates to a process to make a shaped article out of the polyamide according to the invention or out of the composition according to the invention. The process comprises at least the step of providing the polyamide according to the invention or the composition according to the invention and moulding the polyamide or composition into the desired shape. The invention further relates to a shaped article made out of the polyamide according to the invention or the composition according to the invention. The shaped articles can find application in a wide variety of application fields, especially suitable fields are the automotive, electrical and electronics field. In those fields the advantageous combination of properties of the polyamide and/or the composition according to the invention, such as for example the favorable mechanical properties and the favorable hydrophobic behavior, is especially worthwhile.

The invention is further explained in the examples. Polyamides were produced as indicated in the examples below. Melt point, melt enthalpy and solution viscosity were determined according to the methods described below. The results are given in table 1.

Methods used:

Determination of Tm and melt enthalpie $\Delta H_{measured}$ by DSC (according to ISO-11357-3.2, 2009).

The measurement of the melt temperature Tm was carried out with a Mettler Toledo Star System (DSC) using a heating and cooling rate of 10°C/min. in an N2 atmosphere. For the measurement a sample of about 5 mg pre-dried powdered polyamide was used. The pre-drying was carried out at high vacuum, i.e less than 50 mbar and at 105°C during 16 hrs. For the measurement the sample was heated from 0°C to 320°C at 10°C/min, immediately cooled to 0°C at 10°C/min and subsequently heated to 320°C again at 10°C/min. For the melt temperature, Tm, the peak value of the melt peak in the second heating cycle was determined.

From the surface below the peak the melt enthalpy was determined.

Solution viscosity (according to ISO 307, 4th ed.).

The solution viscosity was determined according to ISO 307 forth edition in m-cresol at a concentration of 1.0 g polyamide / 100 ml of m-cresol.

Examples:

Example 1, PA410/436 (0.758/0.242 mol/mol).

A salt was produced by charging a 2 liter autoclave with 2.451 mol 1,4-butylene diamine, 800 g water and 0.577 mol hydrogenated (saturated) dimer fatty dicarboxylic acid Pripol 1009 (M= 565 g/mol). Then 1.803 mol sebacic acid was added. The mixture contained 47 wt% of water. The mixture was heated from 52°C 0 barg to 187°C 8 barg in 33 min, to 199°C 12.5 barg in 10.5 min and subsequently kept at 200°C for 32 minutes, whereby the pressure increased from 12.5 to 16 barg. Then the material was heated to 208.5°C and 16.5 barg in 7 min and subsequently 816 g water was removed by distillation during 77 minutes while keeping the reaction between 11.5-17 barg while T increased to 253°C. Then the remaining 50 g water was destilled off in 63 min, while the pressure was reduced to 0 barg and the temperature was gradually increased to 278°C. The mixture was kept for 300 minutes at 278°C at 0 barg while maintaining a N2 flow of 10 g/min over the melt. After this, the product was released and the exiting strand cooled by a water bath.

*Example 2, (PA46/436) (0.95/0.05 mol/mol).*

A salt was produced by charging a 2 liter autoclave with 3.675 mol 1,4-butylene diamine, 747 g water, 0.176 mol hydrogenated (saturated) dimer fatty dicarboxylic acid Pripol 1009 (M= 565 g/mol). Then 3.346 mol of adipic acid was added. The mixture contained 38 wt% water. The mixture was heated to 2 barg and 140°C in 20 minutes and 456 g water was distilled off in 60 minutes Then the mixture was heated to 205°C in 20 minutes and kept for 40 min at 205°C. Then the reaction mixture was released into an atmospheric inertised vessel and the polyamide was obtained as a solid. The prepolymer thus obtained was subsequently crushed to particles sized between 1-20 mm and subsequently post condensed in a stream of N2/H2O (1800/700 g/h) at 230°C during 16 hours.

*Example 3, PA410/436 (0.76/0.24 mol/mol).*

A salt was produced by charging a 2 liter autoclave with 2.451 mol 1,4-butylene diamine, 104 g water and 0.572 mol hydrogenated (saturated) dimer fatty dicarboxylic acid Pripol 1009 (M= 565 g/mol). Then 1.803 mol sebacic acid was added. The mixture thus contained 10.3 wt% of water. The mixture was heated from 52°C 0 barg to 187°C 7.5 barg in 33 min, to 199°C 11.5 barg in 10.5 min and was subsequently kept at 200°C for 32 minutes, whereby the pressure increased from 11.5 to 13.375 barg. Then the material was heated to 208.5°C and 14.5 barg in 7 min and subsequently 120 g water was removed by distillation during 26 minutes while keeping the reaction at 11.5-15.5 barg while T increases to 250°C. Then the remaining 50 g water was distilled off in 63 min, while the pressure was reduced to 0 barg and the temperature was gradually increased to 278°C. The mixture was kept for 300 minutes at 278°C at 0 barg while maintaining a N2 flow of 10 g/min over the melt. After this, the product was released and the exiting strand cooled by a water bath.

*Example 4, PA46/436/366 (0.79/0.105/0.105 mol/mol).*

A salt was produced by charging a 2 liter autoclave with 2.56 mol 1,4-butylene diamine, 106.5 g water, 0.291 hydrogenated (saturated) dimer fatty diamine Priamine from Croda (M= 536 g/mol), 0.291 mol dimer fatty dicarboxylic acid Pripol 1009 (M= 565 g/mol). Then 2.475 mol of adipic acid was added. The mixture contained 10.5 wt% of water. The mixture was heated from 37°C 0 barg to 11 barg and 204°C in 35 minutes. Then the mixture was kept for 42 min at 205°C, with the pressure increasing to 13.6 barg. Then the reaction mixture was released into an atmospheric inertised vessel and the polyamide was obtained as a solid powder. The prepolymer thus obtained was subsequently crushed to particles sized between 1-20 mm and subsequently post condensed in a stream of N2/H2O (1800/700 g/h) at 230°C during 24 hours.

Table 1.

| | Exp. | Water content | Tm | ΔHm measured | ΦM | ΦW | ΔHm corr | (ΔHm0 - ΔHm corr) /ΦM | C |
|---|---|---|---|---|---|---|---|---|---|
| | | Wt. % | °C | J/g | - | - | J/g | J/g | (Tm0-Tm)/ ΦM |
| PA410/436 | 1 | 47 | 220 | 33.6 | 0.120 | 0.40 | 61.4 | 302.1 | 208.3 |
| PA46/436 | 2 | 38 | 275 | 71.0 | 0.025 | 0.129 | 80 | 549 | 600 |
| PA410/436 | 3 | 10.3 | 235.5 | 49.4 | 0.120 | 0.40 | 82.0 | 83.7 | 79.2 |
| PA46/3636 | 4 | 10.5 | 285.9 | 61.26 | 0.105 | 0.40 | 102 | -77 | 39 |

It is clear from Table 1 that the polyamide containing the hydrogenated (saturated) fatty acid based dicarboxylic acid and whereby the production took place with low levels of water, have very high melting points. This makes the polyamides highly suitable for use in moulding compositions. This in contrast to known polyamides containing the fatty acid based dicarboxylic acid and that were produced with relatively high levels of water, that have much lower melting points (approx. 100 °C). Those polyamides are reported to be suitable for use in inks and hot melt adhesives, see for instance US 7098293 and US 5138027.

**Claims**

**1.** A process for the production of a polyamide containing monomeric units of 1,4-butylene diamine, an aliphatic dicarboxylic acid which is adipic acid or 1,10-decanedioic acid and a fatty acid based dicarboxylic acid having 18 or 36 carbon atoms and/or diamine derived there from, which process comprises the steps of:

a) making a salt mixture containing 1,4-butylene diamine, the aliphatic dicarboxylic acid which is adipic acid or 1,10-decanedioic acid and the fatty acid based dicarboxylic acid having 18 or 36 carbon atoms and/or diamine derived there from, the mixture containing less than 50 wt% water and distilling the mixture to less than 15 wt% of water at a pressure of less than 16 barg, while keeping the mixture at a temperature high enough to keep it liquid,
b) starting the polymerization of the mixture obtained in step a) by increasing the temperature until to at least 180 °C until at least 80 % of the reactive groups has been converted,
c) optionally supplying further 1,4-butylene diamine, an aliphatic dicarboxylic acid which is adipic acid or 1,10-decanedioic acid and a fatty acid based dicarboxylic acid having 18 or 36 carbon atoms and/or diamine derived there from to the reaction mixture.

**2.** Process according to claim 1 **characterized in that** the aqueous salt mixture has a water content of at least 5 wt%.

**3.** Process according to claim 1 or 2, wherein the polyamide contains at least 50 mol % of monomeric units of 1,4-butylene diamine, an aliphatic diarboxylic acid which is adipic acid or 1,10-decanedioic acid and a fatty acid based dicarboxylic acid having 18 or 36 carbon atoms and/or diamine derived there from.

**4.** Process according to any one of claims 1 to 3, wherein the polyamide contains at least 70 mol % of monomeric units of 1,4-butylene diamine, an aliphatic diarboxylic acid which is adipic acid or 1,10-decanedioic acid and a fatty acid based dicarboxylic acid having 18 or 36 carbon atoms and/or diamine derived there from.

**Patentansprüche**

**1.** Verfahren zur Herstellung eines Polyamids, das Monomereinheiten von 1,4-Butylendiamin, einer aliphatischen Dicarbonsäure, bei der es sich um Adipinsäure oder 1,10-Decandisäure handelt, und einer fettsäurebasierten Dicarbonsäure mit 18 oder 36 Kohlenstoffatomen und/oder einem davon abgeleiteten Diamin enthält, wobei das Verfahren folgende Schritte umfasst:

a) Herstellen einer Salzmischung, die 1,4-Butylendiamin, die aliphatische Dicarbonsäure, bei der es sich um Adipinsäure oder 1,10-Decandisäure handelt, und die fettsäurebasierte Dicarbonsäure mit 18 oder 36 Kohlenstoffatomen und/oder das davon abgeleitete Diamin enthält, wobei die Mischung weniger als 50 Gew.-% Wasser enthält, und Destillieren der Mischung bis zu einem Wassergehalt von weniger als 15 Gew.-% bei einem Druck von weniger als 16 barg, wobei die Mischung bei einer Temperatur gehalten wird, die hoch genug ist, um sie flüssig zu halten,
b) Starten der Polymerisation der in Schritt a) erhaltenen Mischung durch Erhöhen der Temperatur auf mindestens 180 °C, bis mindestens 80 % der reaktiven Gruppen umgewandelt worden sind,
c) gegebenenfalls Zuführen von weiterem 1,4-Butylendiamin, einer aliphatischen Dicarbonsäure, bei der es sich um Adipinsäure oder 1,10-Decandisäure handelt, und einer fettsäurebasierten Dicarbonsäure mit 18 oder 36 Kohlenstoffatomen und/oder einem davon abgeleiteten Diamin zur Reaktionsmischung.

**2.** Verfahren nach Anspruch 1, **dadurch gekennzeichnet, dass** die wässrige Salzmischung einen Wassergehalt von mindestens 5 Gew.-% aufweist.

**3.** Verfahren nach Anspruch 1 oder 2, bei dem das Polyamid mindestens 50 Mol-% Monomereinheiten von 1,4-Butylendiamin, einer aliphatischen Dicarbonsäure, bei der es sich um Adipinsäure oder 1,10-Decandisäure handelt, und einer fettsäurebasierten Dicarbonsäure mit 18 oder 36 Kohlenstoffatomen und/oder einem davon abgeleiteten Diamin enthält.

**4.** Verfahren nach einem der Ansprüche 1 bis 3, bei dem das Polyamid mindestens 70 Mol-% Monomereinheiten von 1,4-Butylendiamin, einer aliphatischen Dicarbonsäure, bei der es sich um Adipinsäure oder 1,10-Decandisäure handelt, und einer fettsäurebasierten Dicarbonsäure mit 18 oder 36 Kohlenstoffatomen und/oder einem davon abgeleiteten Diamin enthält.

**Revendications**

1. Procédé de production d'un polyamide contenant des motifs monomères de 1,4-butylènediamine, un acide dicarboxylique aliphatique qui est l'acide adipique ou l'acide 1,10-décanedioïque et un acide dicarboxylique à base d'acide gras ayant 18 ou 36 atomes de carbone et/ou un dérivé diamine de celui-ci, ledit procédé comprenant les étapes de :

   a) fabrication d'un mélange de sels contenant de la 1,4-butylènediamine, l'acide dicarboxylique aliphatique qui est l'acide adipique ou l'acide 1,10-décanedioïque et l'acide dicarboxylique à base d'acide gras ayant 18 ou 36 atomes de carbone et/ou un dérivé diamine de celui-ci, le mélange contenant moins de 50 % en poids d'eau et distillation du mélange à moins de 15 % en poids d'eau à une pression inférieure à 16 barg, tout en maintenant le mélange à une température suffisamment élevée pour le maintenir liquide,
   b) démarrage de la polymérisation du mélange obtenu dans l'étape a) par augmentation de la température jusqu'à au moins 180 °C jusqu'à ce qu'au moins 80 % des groupes réactifs aient été convertis,
   c) facultativement, ajout supplémentaire de 1,4-butylènediamine, d'un acide dicarboxylique aliphatique qui est l'acide adipique ou l'acide 1,10-décanedioïque et d'un acide dicarboxylique à base d'acide gras ayant 18 ou 36 atomes de carbone et/ou un dérivé diamine de celui-ci au mélange de réaction.

2. Procédé selon la revendication 1 **caractérisé en ce que** le mélange aqueux de sels a une teneur en eau d'au moins 5 % en poids.

3. Procédé selon la revendication 1 ou 2, dans lequel le polyamide contient au moins 50 % en moles de motifs monomères de 1,4-butylènediamine, un acide dicarboxylique aliphatique qui est l'acide adipique ou l'acide 1,10-décanedioïque et un acide dicarboxylique à base d'acide gras ayant 18 ou 36 atomes de carbone et/ou un dérivé diamine de celui-ci.

4. Procédé selon l'une quelconque des revendications 1 à 3, dans lequel le polyamide contient au moins 70 % en moles de motifs monomères de 1,4-butylènediamine, un acide dicarboxylique aliphatique qui est l'acide adipique ou l'acide 1,10-décanedioïque et un acide dicarboxylique à base d'acide gras ayant 18 ou 36 atomes de carbone et/ou un dérivé diamine de celui-ci.

**EP 2 675 836 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0009586 A
- GB 1000216 A
- EP 0196981 A1
- US 5138027 A
- US 7098293 A
- US 5001218 A
- US 7098293 B

### Non-patent literature cited in the description

- **ESHENFELD.** *APPLIED AND ENVIRONMENTAL MICROBIOLOGY,* October 2003, 5992-5995
- **MECKING.** *Angew. Chem. Int. Ed.,* 2010, vol. 49, 4306-4308